# EUROPEAN PATENT SPECIFICATION

(11) **EP 2 336 940 B1**
(45) Date of publication and mention of the grant of the patent: **11.11.2015**
(21) Application number: 09180224.9
(22) Date of filing: 21.12.2009
(51) Int. Cl.: G06F 21/34, G06F 21/62

(54) **Method for password management and authentication**
Verfahren zur Kennwort-Verwaltung und Authentifizierung
Méthode pour la gestion de mot de passe et pour l'authentification

(43) Date of publication of application: 22.06.2011
(73) Proprietor: Giga-Byte Technology Co., Ltd., New Taipei City 231 (TW)
(72) Inventor: Teng, Yi-Ming, Taipei Hsien, Taiwan (TW); Chang, Shih-Pin, Taipei Hsien, Taiwan (TW); Tu, Hsiang-Chien, Taipei Hsien, Taiwan (TW)
(74) Representative: Cabinet Chaillot

(56) References cited:
- EP-A1- 1 288 942
- WO-A1-2006/074490
- US-A1- 2008 016 553

## Description

### BACKGROUND OF THE INVENTION

### 1. Field of the Invention

The present invention generally relates to a password management and authentication method, and more particularly, to a password management and authentication method suitable for an electronic device with a trusted platform module (TPM).

### 2. Description of Related Art

Along with the widespread of computers and networks, various computer systems have become the most indispensable tools in our daily life and the main data processing tools in workspaces. Hard disk (HD) offers the largest storage capacity among all existing storage devices and is today's most important data storage device. Thus, users of computer systems are increasingly concerned about the issue of data security. The risk of computer data leak has increased drastically along with the increasing numbers of computer intrusions and Trojan programs. Besides, notebook computers are the major target of thieves because of their high portability, high price, and easy resale. Tremendous and irremediable loss may be caused if the data in a computer system is stolen.

Presently, data protection technique as described in LIU et al., US Pub. NO. 2008/0016553 are widespread, and the most commonly adopted data protection technique is the trusted platform module (TPM) provided by the Trusted Computing Group (TCG), and many global IT companies such as Intel, Acer, IBM, HP, AMD, Sony, Sun Micro, and Microsoft support this protocol. A TPM can directly encrypt a HD or a data folder, and the encrypted HD or data folder has to be decrypted by using a TPM chip besides a password. Thus, even if a hacker obtains a user's password, the hacker cannot access the encrypted data because he has no corresponding TPM chip.

Usually, a user needs to manually input a password to decrypt a file encrypted with a TPM chip and obtain the desired operation right, function, and time. However, the user may forget the password and accordingly not be able to access the encrypted file, which may bring a great trouble to the user.

### SUMMARY OF THE INVENTION

Accordingly, the present invention is directed to a password management and authentication method suitable for an electronic device with a trusted platform module (TPM). In the password management and authentication method, an authentication code is automatically generated according to a TPM password, and the authentication code is stored into an authentication device (for example, a universal serial bus (USB) flash drive or a blue tooth device) selected by a user so that the authentication device can be served as an electronic key of the TPM. Thus, the user needs not to memorize any password and can access a data folder or a hard disk (HD) encrypted by the TPM by simply connecting the authentication device to the electronic device. Thereby, it is very convenient to the user.

The present invention is also directed to a computer readable medium that can serve a storage device (for example, a flash drive or a blue tooth device) as an authentication device and set the authentication device as an electronic key of a TPM, so that a user can conveniently access a data folder or a HD encrypted by the TPM by using the authentication device.

The present invention provides a password management and authentication method suitable for an electronic device with a TPM. The password management and authentication method includes following steps. First, an authentication device connected to the electronic device is detected. Then, a hardware identification code of the authentication device is read. Next, an authentication code is generated according to the hardware identification code and a user password, and the authentication code is stored into the authentication device or the electronic device so that the authentication device can be served as an electronic key. When the authentication device is connected to the electronic device, the authentication code is automatically authenticated. If the authentication code is correct, a data folder or a HD encrypted by the electronic device is automatically decrypted so that the data folder or HD can be used by a user.

According to an embodiment of the present invention, the authentication device includes a USB flash drive, a blue tooth device, or a portable HD, the hardware identification code includes a product serial number or a media access control (MAC) address, and the electronic device includes a notebook computer, a desktop computer, or a mobile phone.

According to an embodiment of the present invention, after the step of detecting the authentication device connected to the electronic device, the user is further inquired about whether to set the authentication device as the electronic key.

According to an embodiment of the present invention, the step of generating the authentication code according to the hardware identification code and the user password further includes requesting the user to input the user password.

According to an embodiment of the present invention, the step of automatically authenticating the authentication code further includes determining whether the hardware identification code of the authentication device matches the authentication code.

According to an embodiment of the present invention, the password management and authentication method further includes closing the data folder or the HD encrypted by the electronic device when the authentication device is disconnected from the electronic device.

According to an embodiment of the present invention, the step of automatically authenticating the authentication code further includes re-authenticating the authentication code when the electronic device is resumed from a suspend state to a normal state.

According to an embodiment of the present invention, the step of automatically authenticating the authentication code further includes detecting whether the TPM is turned on and ignoring the authentication code if the TPM is not turned on.

According to an embodiment of the present invention, the step of generating the authentication code according to the hardware identification code and the user password further includes encrypting the authentication code.

According to an embodiment of the present invention, the electronic device uses the TPM to encrypt or decrypt the data folder or the HD, and the user password is a TPM password.

The present invention provides a password authentication method suitable for an electronic device with a TPM. The password authentication method includes following steps. First, whether the TPM is turned on is detected. If the TPM is turned on, whether an authentication device is connected to the electronic device is detected. Next, an authentication code in the authentication device or the electronic device is automatically authenticated. If the authentication code is correct, a data folder or a HD encrypted by the TPM is automatically decrypted so that the data folder or the HD can be used by a user.

The present invention provides a computer readable medium for storing a plurality of program instructions. The program instructions are loaded into an electronic device to perform following steps. First, an authentication device connected to the electronic device is detected. Then, a hardware identification code of the authentication device is read. Next, an authentication code is generated according to the hardware identification code and a user password, and the authentication code is stored into the authentication device or the electronic device so that the authentication device can be served as an electronic key. When the authentication device is connected to the electronic device, the authentication code is automatically authenticated. If the authentication code is correct, a data folder or a HD encrypted by the electronic device is automatically decrypted so that the data folder or the HD can be used by a user.

The present invention provides a computer readable medium including a plurality of program instructions. The program instructions are loaded into an electronic device to perform following steps. First, whether a TPM is turned on is detected. If the TPM is turned on, whether an authentication device is connected to the electronic device is detected. Next, an authentication code in the authentication device or the electronic device is automatically authenticated. If the authentication code is correct, a data folder or a HD encrypted by the TPM is automatically decrypted so that the data folder or the HD can be used by a user.

As described above, in the present invention, a flash drive or a blue tooth device is served as an electronic key of a TPM. Accordingly, a user can select his own authentication device as the electronic key, and after setting the electronic key, the user can use the flash drive or the blue tooth device to open a file encrypted by the TPM. Thereby, the user needs not to memorize any password, which is very convenient. Additionally, in the present invention, whether the electronic key used by the user is correct is determined according to a hardware identification code of the flash drive or blue tooth device so that the authentication code in the flash drive or blue tooth device is protected. Thereby, data security is further enhanced.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a flowchart of a password management and authentication method according to a first embodiment of the present invention.
FIG. 2 is a flowchart of a password authentication method according to a second embodiment of the present invention.
FIG. 3 is a flowchart illustrating how to set an electronic key according to a third embodiment of the present invention.
FIG. 4 is a diagram of a hardware device according to a fourth embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

### First Embodiment

A password management and authentication method is provided in the present embodiment, wherein an authentication device selected by a user is set as an electronic key of a trusted platform module (TPM) so that the user can directly open a data folder or a hard disk (HD) encrypted by the TPM by using the authentication device. The user needs not to memorize a TPM password. Instead, the user simply connects the authentication device to an electronic device (for example, a notebook computer, a desktop computer, or a mobile phone), and the electronic device then automatically identifies whether the connected authentication device is correct and opens the data folder or the HD encrypted by the TPM to be used by the user. Thereby, it is made vey convenient to the user. In other words, the password management and authentication method provided by the present invention replaces the conventional technique that requires the password to be input manually and allows a system to automatically authenticate an authentication code and automatically input a TPM password so as to decrypt the encrypted data. In the present invention, the authentication device that can be served as an electronic key may be a universal serial bus (USB) flash drive, a blue tooth device, a portable HD, or a mobile phone with a storage function. However, the type of the authentication device is not limited in the present embodiment.

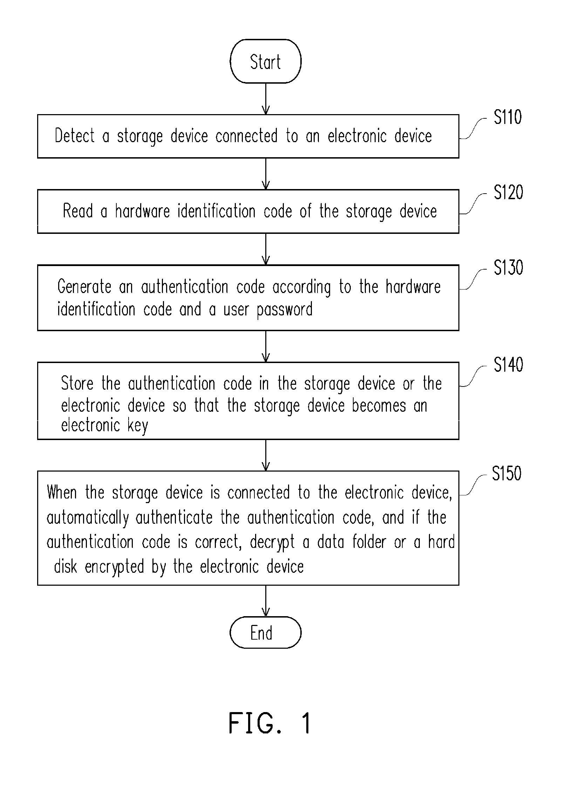

FIG. 1 is a flowchart of the password management and authentication method according to the first embodiment of the present invention. Referring to FIG. 1, first, an authentication device connected to an electronic device is detected (step S110). Herein the authentication device may be connected to the electronic device through a wired or wireless connection, which is not limited in the present embodiment. In addition, in step S110, the user may be further inquired about whether to set the authentication device as an electronic key. Then, a hardware identification code of the authentication device is read (step S120). In step S120, a list of authentication devices that can be served as the electronic key may be further provided to be selected by the user and the user may be requested to set up a user password, such as a TPM password. Next, an authentication code is generated according to the hardware identification code and the user password (step S130). After that, the authentication code is automatically stored in the authentication device or the electronic device so that the authentication device becomes an electronic key (step S140). In step S140, the authentication code may be encrypted before it is stored into the authentication device, wherein any encryption algorithm may be adopted. When the authentication device is connected to the electronic device, the authentication code in the authentication device or the electronic device is automatically authenticated. If the authentication code is correct, a data folder or a HD encrypted by the electronic device is automatically decrypted to be used by the user (step S150). The electronic device may use the TPM to encrypt/decrypt the data folder or the HD. However, the algorithm or device used for encrypting/decrypting the data folder or HD is not limited in the present embodiment.

Additionally, during the process of authenticating the authentication code, whether the authentication code matches the hardware identification code of the authentication device is determined, and the data folder or the HD is not decrypted if the authentication code does not match the hardware identification code of the authentication device. Through such an authentication process, one cannot access the encrypted data even if he steals the authentication code and stores the authentication code in another authentication device. An encrypted file cannot be opened even if the authentication code is stolen as long as a different authentication device is used. Accordingly, the encrypted file is further protected. It should be noted that the hardware identification code may be an exclusive code of an electronic product, such as a product serial number or a media access control (MAC) address. However, the definition of the hardware identification code is not limited in the present embodiment.

As described above, in the present invention, an electronic key is set up by using an authentication device selected by a user and a user password, so that the user needs not to memorize the password and can use the encryption mechanism of the TPM in a simple and convenient way. In addition, the password management and authentication method provided by the present embodiment is also applicable to a general encryption system, wherein a user can conveniently set up a personalized electronic key by using a flash drive or a blue tooth device. Moreover, it should be noted that the storage of the authentication code is not limited in the present embodiment, and the authentication code may be stored in the authentication device, the electronic device, or both the authentication device and the electronic device according to the user's selection.

The present invention also provides a computer readable medium. The computer readable medium is suitable for storing a computer program including a plurality of program instructions for executing the password management and authentication method illustrated in FIG. 1. The computer program is composed of a plurality of program instructions (for example, an organization chart establishing program instruction, a table approving program instruction, a setting program instruction, and a deployment program instruction, etc). These program instructions can be loaded into an electronic device and executed by the same to accomplish the electronic key setup and password authentication functions described above.

### Second Embodiment

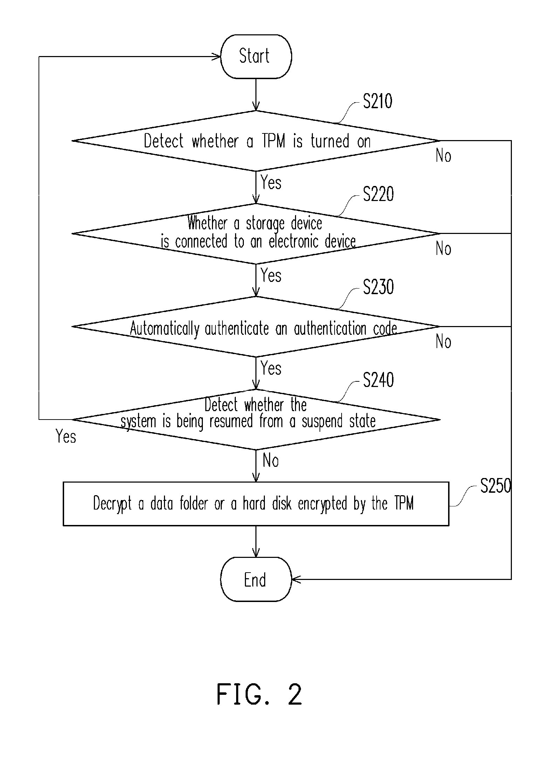

In foregoing step S150 illustrated in FIG. 1, whether the authentication device is a correct electronic key is determined. If the technique in the present invention is applied to an electronic device with a TPM, the implementation of foregoing step S150 will be described in detail herein. FIG. 2 is a flowchart of a password authentication method according to the second embodiment of the present invention. Referring to FIG. 2, first, whether the TPM is turned on is detected. If the TPM is not turned on, the process is terminated and no password authentication is carried out. If the TPM is turned on, whether an authentication device is connected to the electronic device is further determined (step S220). If the authentication device is connected to the electronic device, an authentication code in the authentication device or the electronic device is automatically authenticated, wherein whether a TPM password (i.e., a user password) and a hardware identification code are correct is further determined (step S230). Next, whether the system is being resumed from a suspend state (i.e., S3) to a normal state is detected. If the system is being resumed from the suspend state to the normal state, steps S210∼S230 are repeated to avoid system misjudgement (step S240). If the system is in the normal state, a data folder or a HD encrypted by the TPM is automatically decrypted to be used by a user (step S250).

It should be noted that foregoing step S240 is executed to prevent misjudgement that may be caused when the system is being resumed from the suspend state and not yet stabilized. However, the execution of the step S240 is not limited in the present embodiment and can be determined according to the actual design requirement without affecting the function of the present embodiment.

Based on the description of FIG. 2, the present invention further provides a computer readable medium, wherein the computer readable medium is suitable for storing a computer program including a plurality of program instructions for executing the password authentication method illustrated in FIG. 2. The computer program is composed of a plurality of program instructions (for example, an organization chart establishing program instruction, a table approving program instruction, a setting program instruction, and a deployment program instruction, etc). These program instructions can be loaded into an electronic device and executed by the same to accomplish the electronic key setup and password authentication functions described above.

### Third Embodiment

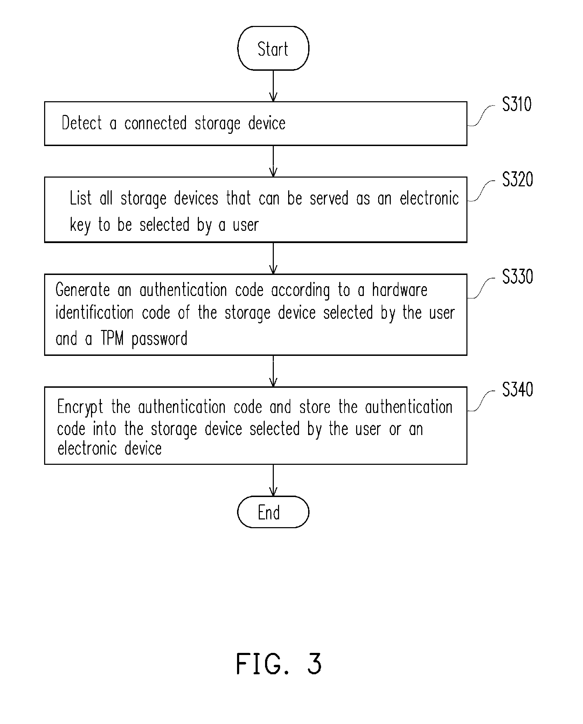

In foregoing process for setting up the electronic key, the user may set up the electronic key through a visualized user interface, wherein the settings of the interface is not limited in the present embodiment. Next, a method provided by the present invention for setting up an electronic key will be described with reference to FIG. 3. FIG. 3 is a flowchart illustrating how an electronic key is set up according to the third embodiment of the present invention. First, all connected authentication devices are detected (step S310), and all the authentication devices that can be served as the electronic key are provided to the user to be selected (step S320). Next, an authentication code is generated according to a hardware identification code of the authentication device selected by the user and a TPM password (step S330). After that, the authentication code is encrypted and stored into the authentication device selected by the user or the electronic device (step S340). The authentication device containing the authentication code can then be served as the electronic key of a TPM, and the TPM can be used for decryption by simply connecting the authentication device to the electronic device. Thereby, the conventional method that requires the user to manually input the TPM password is replaced and it is made very convenient to the user. The authentication code and other details of the present embodiment can be referred to the descriptions of foregoing embodiments therefore will not be described herein.

### Fourth Embodiment

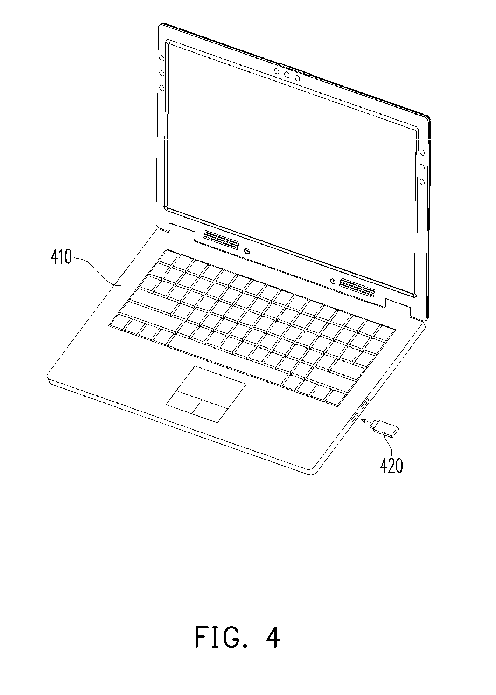

FIG. 4 is a diagram of a hardware device according to the fourth embodiment of the present invention. Referring to FIG. 4, the notebook computer 410 has a TPM. When the USB flash drive 420 is inserted into a USB slot of the notebook computer 410, the notebook computer 410 automatically detects whether there is a correct authentication code in the USB flash drive 420. If there is the correct authentication code, a file encrypted by the TPM is automatically opened to be used by the user. If there is no correct authentication code in the USB flash drive 420, the user can set up an electronic key through a user interface as described in foregoing third embodiment, and the process thereof will not be described herein.

In addition, it should be noted that even though foregoing embodiments are described with a TPM as an example, the application of the present invention is not limited to a system with TPM. Instead, the technique provided by the present invention may also be applied to other data encryption techniques to replace the conventional method that requires a password to be manually input by using a flash drive or a blue tooth device and to make it very convenient to the user. Those having ordinary knowledge in the art can understand other applications of the present invention through the descriptions of foregoing embodiments, and these applications will not be described herein.

As described above, in the present invention, a flash drive or a blue tooth device is used as an electronic key so that a user can conveniently open a file encrypted by a TPM. Meanwhile, in the present invention, a user is allowed to set up a personalized electronic key, and an authentication code of the electronic key is generated according to a hardware identification code and a user password so that the user's data can be further protected.

## Claims

1. A password management and authentication method, suitable for an electronic device with a trusted platform module (TPM), the password management and authentication method being **characterized by** comprising the steps of:
detecting an authentication device connected to the electronic device through wireless electrical connection;
reading a hardware identification code of the authentication device;
generating an authentication code according to the hardware identification code and a user password set up by a user; and
storing the authentication code into the authentication device or the electronic device so that the authentication device becomes an electronic key;
wherein, when the authentication device is reconnected to the electronic device, detecting whether the TPM of the electronic device is turned on, if the TPM is turned on, detecting whether an authentication device is connected to the electronic device, followed by automatically authenticating an authentication code in the authentication device to the electronic device, and if the authentication code is correct, automatically decrypting a data folder or a hard disk (HD) encrypted by the TPM so that the data folder or the HD can be used by the user, wherein, when the authentication device is reconnected to the electronic device, detecting whether the electronic device is resumed from a suspended state to a normal state, if the electronic device is resumed from the suspended state, re-executing the step of automatically authenticating the authentication code, if the electronic device is in the normal state, automatically decrypting the data folder or the hard disk (HD) encrypted by the electronic device so as to be used by the user.

2. The password management and authentication method according to claim 1, wherein the authentication device is a universal serial bus (USB) flash drive, a blue tooth device, or a portable HD.

3. The password management and authentication method according to claim 1, wherein the hardware identification code is a product serial number or a media access control (MAC) address.

4. The password management and authentication method according to claim 1, wherein after the step of detecting the authentication device connected to the electronic device, the password management and authentication method further comprises:
inquiring the user about whether to set the authentication device as the electronic key.

5. The password management and authentication method according to claim 1 further comprising:
closing the data folder or the HD encrypted by the electronic device when the authentication device is disconnected from the electronic device.

6. The password management and authentication method according to claim 1, wherein the step of automatically authenticating the authentication code further comprises detecting whether the TPM is turned on and ignoring the authentication code if the TPM is not turned on.

7. The password management and authentication method according to claim 1, wherein the step of generating the authentication code according to the hardware identification code and the user password further comprises encrypting the authentication code.

8. The password management and authentication method according to claim 1, wherein the electronic device uses the TPM to encrypt or decrypt the data folder or the HD.

9. The password management and authentication method according to claim 1, wherein the user password is a TPM password.

## Patentansprüche

1. Eine Passwort-Management- und Authentifizierungsmethode passend für ein elektronisches Gerät mit einem Trusted Platform Module (TPM), wobei die Passwort-Management- und Authentifizierungsmethode **dadurch gekennzeichnet ist, dass** sie die folgenden Schritte umfasst:
Detektierung einer Authentifizierungsvorrichtung, die mit dem elektronischen Gerät durch eine drahtlose elektrische Verbindung verbunden ist;
Lesen eines Hardware-Identifizierungscodes der Authentifizierungsvorrichtung;
Erzeugen eines Authentifizierungscodes gemäß des Hardware-Identifikationscodes und einem Nutzer-Passwort, das von einem Nutzer festgelegt wurde; und
Speichern des Authentifizierungscodes in der Authentifizierungsvorrichtung oder dem elektronischen Gerät, so dass die Authentifizierungsvorrichtung ein elektronischer Schlüssel wird;
wobei, wenn die Authentifizierungsvorrichtung mit dem elektronischen Gerät verbunden wird, detektiert wird, ob das TPM der elektronischen Vorrichtung eingeschaltet ist; wenn das TPM eingeschaltet ist, wird erfasst, ob eine Authentifizierungsvorrichtung mit dem elektronischen Gerät verbunden ist, gefolgt von einer automatischen Authentifizierung eines Authentifizierungscodes in der Authentifizierungsvorrichtung für das elektronische Gerät; und wenn der Authentifizierungscode korrekt ist, automatisch Entschlüsseln eines Datenordners oder eine Festplatte (Hard Disk/HD), die durch das TPM verschlüsselt wurde, so dass der Datenordner oder die HD durch den Nutzer verwendet werden kann, wobei, wenn die Authentifizierungs-Einrichtung erneut mit der elektronischen Vorrichtung verbunden wird, detektiert wird, ob die elektronische Vorrichtung aus einem unterbrochenen Zustand wieder in einen normalen Zustand überführt wird, und falls die elektronische Vorrichtung wieder aus einem suspendierten Zustand aktiviert wird, erneut die Stufe der automatischen Authentifizierung des Authentifizierungscodes ausführt, und falls das elektronische Gerät im Normalzustand ist, automatisch den Datenordner oder die Festplatte (HD), die durch die elektronische Vorrichtung verschlüsselt worden ist, entschlüsselt, damit diese durch den Benutzer verwendet werden kann.

2. Die Passwort-Management- und Authentifizierungsmethode nach Anspruch 1, wobei die Authentifizierungsvorrichtung ein Universal Serial Bus (USB)-Flash-Laufwerk, ein Bluetooth-Gerät oder eine tragbare HD ist.

3. Die Passwort-Management- und Authentifizierungsmethode nach Anspruch 1, wobei der Hardware-Identifikationscode eine Seriennummer oder eine Media Access Control (MAC)-Adresse ist.

4. Die Passwort-Management- und Authentifizierungsmethode nach Anspruch 1, wobei nach dem Schritt des Detektierens der Authentifizierungsvorrichtung, die mit dem elektronischen Gerät verbunden ist, die Passwort-Management- und Authentifizierungsmethode ferner Folgendes umfasst:
Fragen des Nutzers, ob die Authentifizierungsvorrichtung als der elektronischer Schlüssel eingerichtet werden soll.

5. Die Passwort-Management- und Authentifizierungsmethode nach Anspruch 1, ferner umfassend:
Schließen des Datenordners oder der HD, die von dem elektronischen Gerät verschlüsselt wurden, wenn die Authentifizierungsvorrichtung von dem elektronischen Gerät getrennt wird.

6. Die Passwort-Management- und Authentifizierungsmethode nach Anspruch 1, wobei der Schritt des automatischen Authentifizierens des Authentifizierungscode ferner ein Detektieren umfasst, ob das TPM eingeschaltet ist und das Ignorieren des Authentifizierungscodes, falls das TPM nicht eingeschaltet ist.

7. Die Passwort-Management- und Authentifizierungsmethode nach Anspruch 1, wobei der Schritt des Erzeugens des Authentifizierungscodes entsprechend des Hardware-Identifikationscodes und des Nutzer-Passworts weiterhin das Verschlüsseln des Authentifizierungscodes beinhaltet.

8. Die Passwort-Management- und Authentifizierungsmethode nach Anspruch 1, wobei das elektronische Gerät das TPM nutzt, um den Datenorder oder die HD zu verschlüsseln oder zu entschlüsseln.

9. Die Passwort-Management- und Authentifizierungsmethode nach Anspruch 1, wobei das Nutzer-Passwort ein TPM-Passwort ist.

## Revendications

1. Procédé de gestion de mot de passe et d'authentification, approprié pour un dispositif électronique avec un module de plateforme de confiance (TPM), le procédé de gestion de mot de passe et d'authentification étant **caractérisé par le fait qu'**il comprend les étapes consistant à:
détecter un dispositif d'authentification connecté au dispositif électronique à travers une connexion électrique sans fil ;
lire un code d'identification matériel du dispositif d'authentification ;
générer un code d'authentification conformément au code d'identification matériel et à un mot de passe d'utilisateur configuré par un utilisateur ; et
stocker le code d'authentification dans le dispositif d'authentification ou le dispositif électronique de telle sorte que le dispositif d'authentification devient une clé électronique ;
dans lequel, lorsque le dispositif d'authentification est reconnecté au dispositif électronique, détecter si le TPM du dispositif électronique est allumé, si le TPM est allumé, détecter si un dispositif d'authentification est connecté au dispositif électronique, suivi par authentifier automatiquement un code d'authentification dans le dispositif d'authentification sur le dispositif électronique, et si le code d'authentification est correct, déchiffrer automatiquement un dossier de données ou un disque dur (HD) chiffré par le TPM de telle sorte que le dossier de données ou le HD puisse être utilisé par l'utilisateur, dans lequel, lorsque le dispositif d'authentification est reconnecté au dispositif électronique, détecter si le dispositif électronique a repris d'un état suspendu à un état normal, si le dispositif électronique a repris de l'état suspendu, exécuter de nouveau l'étape d'authentification automatique du code d'authentification, si le dispositif électronique est dans l'état normal, déchiffrer automatiquement le dossier de données ou le disque dur (HD) chiffré par le dispositif électronique afin d'être utilisé par l'utilisateur.

2. Procédé de gestion de mot de passe et d'authentification selon la revendication 1, dans lequel le dispositif d'authentification est une clé USB à bus série universel (USB), un dispositif Bluetooth, ou un HD portable.

3. Procédé de gestion de mot de passe et d'authentification selon la revendication 1, dans lequel le code d'identification matériel est un numéro de série de produit ou une adresse de contrôle d'accès au support (MAC).

4. Procédé de gestion de mot de passe et d'authentification selon la revendication 1, dans lequel après l'étape consistant à détecter le dispositif d'authentification connecté au dispositif électronique, le procédé de gestion de mot de passe et d'authentification comprend en outre :
demander à l'utilisateur s'il faut configurer le dispositif d'authentification en tant que la clef électronique.

5. Procédé de gestion de mot de passe et d'authentification selon la revendication 1, comprenant en outre :
fermer le dossier de données ou le HD chiffré par le dispositif électronique lorsque le dispositif d'authentification est déconnecté du dispositif électronique.

6. Procédé de gestion de mot de passe et d'authentification selon la revendication 1, dans lequel l'étape d'authentification automatique du code d'authentification comprend en outre détecter si le TPM est allumé et ignorer le code d'authentification si le TPM n'est pas allumé.

7. Procédé de gestion de mot de passe et d'authentification selon la revendication 1, dans lequel l'étape de génération du code d'authentification conformément au code d'identification matériel et au mot de passe d'utilisateur comprend en outre chiffrer le code d'authentification.

8. Procédé de gestion de mot de passe et d'authentification selon la revendication 1, dans lequel le dispositif électronique emploie le TPM pour chiffrer ou déchiffrer le dossier de données ou le HD.

9. Procédé de gestion de mot de passe et d'authentification selon la revendication 1, dans lequel le mot de passe d'utilisateur est un mot de passe TPM.
